# EUROPEAN PATENT SPECIFICATION

(11) **EP 1 236 496 B1**
(45) Date of publication and mention of the grant of the patent: **17.05.2006**
(21) Application number: 02003959.0
(22) Date of filing: 22.02.2002
(51) Int. Cl.: B01D 53/26, B01D 53/04, B01J 20/32, B01J 20/10, B01D 53/047, B60T 17/00

(54) **Process and adsorbent for gas drying**
Verfahren und Vorrichtung zur Gastrocknung
Procédé et dispositif de séchage de gaz

(30) Priority: 28.02.2001 US 796218
(43) Date of publication of application: 04.09.2002
(73) Proprietor: UOP LLC, Des Plaines, IL 60017 (US)
(72) Inventor: Kanazirev, Vladislav Ivanov, Arlington Heights, Illinois 60004 (US); Cohen, Alan Philip, Highland Park, Illinois 60035 (US)
(74) Representative: Weber, Dieter

(56) References cited:
- EP-A- 0 380 295
- EP-A- 0 714 689
- US-A- 4 197 095
- US-A- 4 507 396
- US-A- 4 737 478
- US-A- 5 985 790

## Description

### FIELD OF THE INVENTION

The present invention relates, in general, to a process for drying a compressed gas stream and, more particularly, to a process for drying a gas stream with a novel solid adsorbent.

### BACKGROUND OF THE INVENTION

Drying of gases to remove water is a common requirement in providing gases at high pressure for use in chemical processing, air brake systems in transportation, and shop applications ranging from pneumatic control to paint spraying. The removal of moisture from the high pressure gases reduces corrosion and prevents water buildup and freezing in such systems. Condensation of water in air brake systems or pneumatic systems can result in inefficiencies and system failure.

In fluid drying and purification applications in which a contaminant is present in the fluid at concentrations of 3 percent or less, the adsorbent is generally of low value and frequently removed for disposal. One important drying and purification application includes drying air, particularly compressed air. In such applications cost can become a significant factor in the selection of a drying process. For example, a once-through process employs an adsorbent which is exposed to the fluid until the adsorbent is no longer effective in removing the contaminant. Once-through processes require large inventories of adsorbent and frequent disposal of spent adsorbent. An alternative to this approach is to employ a regenerative adsorption cycle wherein the adsorbent is periodically regenerated to remove the contaminant from the spent adsorbent and restore the adsorbent's capacity for adsorbing the contaminant. Regenerative adsorption cycles are generally classified according to the manner in which the desorption takes place. Both thermal swing adsorption processes and pressure swing adsorption processes are generally known in the art for various types of adsorptive separations. Generally, thermal swing processes utilize the process steps of adsorption at a low temperature, regeneration at an elevated temperature with a hot purge gas and subsequent cooling down to the adsorption temperature. One process for drying gases generally exemplary of thermal swing processes is described in US 4,484,933 B1, issued to Cohen. The patent describes basic thermal swing processing steps coupled with the use of an auxiliary adsorber bed for improving the regeneration step. Thermal swing processes are often used for drying gases and liquids and for purification where trace impurities are to be removed. Often, thermal swing processes are employed when the components to be adsorbed are strongly adsorbed on the adsorbent, i.e., water, and thus, heat is required for regeneration. Thermal swing adsorption processes are characterized by long cycles which require large amounts of purge gas to regenerate and cool the adsorbent to return the adsorbent to adsorption conditions in each cycle.

Pressure swing adsorption (PSA) provides a means for adsorption that does not require heat for regeneration. Instead, regeneration is accomplished by reducing the pressure in the adsorber bed to below the pressure at which adsorption had occurred. PSA process typically includes steps of adsorption at an elevated pressure, desorption to a lower pressure and repressurization to the adsorption pressure. The process also often includes a purge step at the desorption pressure to enhance desorption. PSA processes are characterized by lower adsorbent differential loadings within each cycle which results in greater inventories of adsorbent. Furthermore, the cycle time of a PSA process is shorter than a thermal swing adsorption process because there are no heat transfer related delays while the bed is cooled to adsorption conditions. Lastly, the amount of purge gas required for a PSA process can be significantly lower than the amount of purge gas in a thermal swing adsorption process, because the purge gas in the PSA process is only required to remove adsorbate from the adsorbent and not to additionally cool the adsorbent.

Such PSA processing is disclosed in US 3,430,418 B1 issued to Wagner and in US 3,986,849 B 1 issued to Fuderer et al, wherein cycles based on the use of multi-bed systems are described in detail. As is generally known and described in these patents, the PSA process is generally carried out in a sequential processing cycle that includes each bed of the PSA system. Such cycles are commonly based on the release of void space gas from the product end of each bed in one or more cocurrent depressurization steps upon completion of the adsorption step. In these cycles, the released gas typically is employed for pressure equalization and for subsequent purge steps. The bed is thereafter countercurrently depressurized and often purged to desorb the more selectively adsorbed component of the gas mixture from the adsorbent and to remove such gas from the feed end of the bed prior to the repressurization thereof to the adsorption pressure.

Pressure swing dryers are used on heavy trucks and busses to dry the compressed air that operates the brakes and other pneumatic accessories. These dryers use molecular sieve or other desiccants to remove water from ambient air that has been compressed to usually 8.8 bar gauge. Some trucks now operate systems with 12 bar gauge of air pressure. The dryers operate on a pressure swing cycle. Compressed ambient air is passed into the air brake dryer unit, wherein liquid water is separated and water vapor is adsorbed on a desiccant. Dry, compressed air is removed from the air brake dryer unit and passed to the brake system. Water is desorbed from the desiccant in a desorption or depressurization step which typically takes place at atmospheric pressure, 0 bar (gauge pressure) and may include a purge step at atmospheric pressure.

In air brake systems, the compressor runs intermittently in cycles determined by the filling and depletion of the air in a supply tank. The compressor pumps until the pressure in the supply tank reaches the cut out pressure or upper pressure limit, typically 1000 kPa. Then the compressor rests until the pressure in the supply tank is reduced by air usage in the brake systems, other pneumatic equipment and regeneration (purging) of the dryer, falls to the lower pressure limit reaches 860 kPa.

An alumino-silicate gel desiccant, for example, is commonly used as a drying agent for extracting water vapor from gas. This desiccant has a strong molecular attraction for water vapor and may require heating to 120° to 205°C to fully desorb water vapor. It has been observed that alumino-silicate gel desiccant also will adsorb VOC's and may require heating up to 175°C or more to fully desorb typical VOC's released in a paint spray booth. Low boiling point hydrocarbons are desorbed at a lower temperature than higher boiling point hydrocarbons. When either water vapor or VOC's are directly adsorbed by a desiccant, a strong dipole bond is formed. One desiccant for adsorbing VOC's is an alumino-silicate gel containing 3% alumina (Al₂O₃) and 97% silica (SiO₂) in the form of hard, generally spherical beads. Such a desiccant is commercially available, for example, from Engelhard Corporation of Iselin, New Jersey under the trademark "Sorbead®".

Pressure swing dryers contain a desiccant, which alternately adsorbs water from the compressed air and then desorbs the water into the purge air. Molecular sieves, silica gel, activated alumina, and alumino-silicate gels as disclosed hereinabove are all used commercially as pressure swing desiccants. Other VOC adsorbent materials such as zeolite also may be acceptable alternatives (see US 5,968,235 B1). In addition to the ability to adsorb and desorb water, a pressure swing desiccant should have suitable physical properties (attrition, abrasion, and dust) and low cost. Low reactivity with hydrocarbons is also desirable. Silica gel is a low cost alternative, but generally suffers from breakage when contacted with liquid water. Activated alumina is also a low cost alternative, but suffers from high abrasion loss and dust. Molecular sieves are effective, but cost much more than silica gel or alumina. The alumino-silicate gel consisting of 3% alumina and 97% silica is more costly than activated alumina and is highly reactive to unsaturated hydrocarbons than molecular sieves, silica gel or alumina.
Alumina and silica are known in the art also as materials for the production of catalysts. EP 0 380 295 A discloses a silver catalyst for the production of ethylene oxide and a method for making the same. In this catalyst α-alumina serves as a carrier material and the outer surface of the carrier and the surface its pores are coated with amorphous silica by applying an aqueous solution of colloidal silica. The specific surface area of such carriers is in a range from 0.75 - 5 m²/g and carriers having a specific surface area of more than 5 m²/g are according to EP 0 380 295 A impractical because they fail to produce a substantially satisfactory catalyst.

There is a need for low cost, effective adsorbents for use in pressure swing adsorption air dryers. A suitable adsorbent must not only produce low dew points, it must also have acceptable physical properties, such as low dust and resistance to abrasion loss and attrition. Air brake drying represents a severe environment for the operation of a dryer wherein the desiccant is subject to vibration and large pressure swings between the adsorption and desorption steps. In addition, the desiccant is exposed to hot compressed air which may contain oil and other volatile compounds such as hydrocarbons which could harm brake cylinders and related equipment. Adsorbents are sought which are more resistant to attrition and abrasion loss than conventional materials and which are effective in the removal of water and other contaminants from the compressed gas to produce dry compressed gases, i.e., compressed gases having a low dew point.

### SUMMARY OF THE INVENTION

The present invention provides a desiccant and a process for drying a gas comprising a gas component such as air, light hydrocarbons, nitrogen, hydrogen, and mixtures thereof and water. The present invention can be employed to provide improved systems for drying compressed gases, for such applications as air brake drying in truck and locomotive brake systems, and in providing dry compressed gases for shop use. According to the present invention, activated shaped or pre-formed alumina particles with a surface area between 100 and 550 m²/g are modified by depositing a thin dispersed layer of colloidal silica on the external surface of the alumina particles. The colloidal silica coating drastically reduces the abrasion loss and dusting. Surprisingly, this improvement is achieved without seriously reducing the drying performance of alumina. Furthermore, the colloidal silica-coated alumina of the present invention has low reactivity to unsaturated hydrocarbons because the surface coating of colloidal silica minimizes contact between the unsaturated hydrocarbons and the deactivated alumina surface.

### DETAILED DESCRIPTION OF THE INVENTION

The process of the invention employing the inventive adsorbent being produced as discussed in detail below is intended to be practiced on feed gas streams which comprise a feed gas and moisture or water; such feed gas streams include air, nitrogen, light hydrocarbons and mixtures thereof. The term "light hydrocarbons" is intended to include hydrocarbons having 1 to 4 carbon atoms per molecule.

The process of the present invention is useful in gas drying applications such as in air brake systems for trucks or locomotives. In these systems the gas, such as air, is generally saturated with water following its compression to some operating pressure to activate the braking systems of the vehicle or piece of heavy equipment. If this water is not removed or significantly reduced, the braking systems will be subject to greater corrosion, or freezing, resulting in higher maintenance costs and reduced reliability. Generally, the feed gas stream employed to activate a braking system comprises air at water saturation conditions and a pressure above atmospheric pressure. Preferably, the temperature at which the feed gas stream is available ranges between 37°C and 82°C. More preferably, the temperature at which the feed gas stream is available ranges between 37°C and 66°C. Preferably, the pressure at which the feed stream is available is greater than 790 kPa, and more preferably the pressure at which the feed gas stream is available ranges between 790 kPa and 1.14 MPa, and most preferably the pressure at which the feed gas stream is available ranges between 790 and 869 kPa.

The water in the feed gas stream, or compressed gas stream, will be present at saturated conditions which comprise from 8,000 to 32,000 ppm-vol depending upon the temperature and the pressure of the feed gas. Preferably the water content in the product gas, or dry compressed gas, produced by the dryer will be reduced by at least 95 percent, and more preferably the water content in the product gas will be reduced by 95 to 99.9 volume percent of the amount of water in the feed gas. Preferably the amount of water in the product gas stream will be less than 1000 ppm-vol, and more preferably the amount of water in the product gas stream will range from 50 to 100 ppm-vol. In some cases the water content of the product gas will be expressed as the dew point depression from the ambient air temperature, wherein the dew point depression is the ambient temperature minus the dew point temperature for any stream. The dew point temperature for any stream is the temperature at which condensation will occur. In such cases, the dew point depression preferably will be greater than 17°C and more preferably will be greater than 50°C.

The term "pressure swing adsorption" as used herein generally relates to an adsorption process wherein an adsorber bed is part of an integrated process whereby a continuous adsorber operation can be obtained while simultaneously regenerating a spent adsorber bed. In pressure swing adsorption, there exists a plurality of adsorption zones maintained at an elevated pressure effective to adsorb water while allowing the bulk of the feed gas to pass through the adsorber bed. At a defined time, the passing of the adsorber feed to a first adsorber bed is discontinued and the first adsorber bed is depressurized by one or more counter-current depressurization steps wherein the pressure is reduced to a defined level which permits additional components of the feed gas remaining in the first adsorber bed to be withdrawn and utilized or vented. The first adsorber bed is depressurized in a countercurrent depressurization step wherein the pressure in the first adsorber bed is further reduced by withdrawing desorbed water vapor countercurrently to the direction of the feed. Finally the adsorber bed is purged with a purge gas such as dried product gas and repressurized. The final stage of repressurization is with the feed gas or the product gas in order to conserve the feed or the product gas.

In air brake drying systems, the process is simplified and generally there are no feed gas conservation steps. Pressure swing adsorption in air brake drying is generally carried out in a single adsorbent bed with essentially two process steps. The adsorption stroke comprises rising pressure adsorption as the feed gas is introduced and the adsorber bed pressure rises to the pressure of the feed gas, followed by constant pressure adsorption as the feed gas is passed through the adsorber bed and a product gas is collected in a product reservoir. The adsorption stroke is continued until a pressure set point in the product reservoir is reached which corresponds to the capacity of the reservoir. Typically this pressure set point is 930 kPa and is reached after 2 minutes in heavy service, or in 30 seconds under light duty. At this point, the feed gas passing is discontinued and the adsorber bed is placed in a desorption stroke wherein the adsorber bed is simultaneously counter-currently depressurized and purged with a portion of the product gas withdrawn from the product reservoir. Typically the portion of the product gas is collected during each cycle in the product reservoir, or pressurized storage tank, and the desiccant or adsorbent is disposed in a replaceable or refillable cartridge in an air brake dryer assembly. At the completion of the desorption stroke, the pressure swing air dryer is returned to the adsorption stroke. A cycle time for pressure swing air brake drying means the length of time of the adsorption stroke plus the length of the desorption stroke. Typically the cycle times for such pressure swing air brake dryers ranges from 60 seconds to 150 seconds. The pressure swing air brake dryers are fixed beds containing an adsorbent and are configured with low length to diameter ratios to accommodate vehicle space limitations. In some severe service situations for example in locomotives, pressure swing adsorption air brake systems are provided with 2 adsorption beds which alternate between the adsorption and desorption strokes to provide a continuous supply of dry air. An example of an air brake dryer containing a desiccant is disclosed in US 5,607,500 B1.

Pressure swing adsorption systems are more efficient at higher pressures, typically pressures greater than 2.2 MPa. In addition, pressure swing adsorption air brake dryers are generally characterized by short cycles with relatively low differences in adsorbent loading between the upper and lower pressure ranges of operation. This leads to the use of larger amounts of adsorbent in a pressure swing adsorption device than a thermal swing adsorption process. Furthermore, the amount of purge gas required for a pressure swing adsorption unit varies inversely with pressure; the ratio of purge gas to feed gas is reduced as the pressure increases. At low pressures, the amount of purge gas approaches the amount of feed gas.

The adsorbent of the present invention is prepared by treating shaped alumina particles with colloidal silica prior to activation. The activated alumina referred to includes alumina having a surface area in the range of 100 to 550 m²/g. Further, the activated alumina powder is preferably obtained by rapid dehydration of aluminum hydroxides, e.g., alumina trihydrate or hydrargillite in a stream of hot gases. Dehydration may be accomplished in any suitable apparatus using the stream of hot gases. Generally, the time for heating or contacting with the hot gases is a very short period of time, typically from a fraction of a second to 4 or 5 seconds, for example. Normally, the temperature of the gases varies between 400° and 1000°C. The process is commonly referred to as flash calcination and is disclosed in US 2,915,365 B1. However, other methods of calcination may be employed to dehydrate or partially dehydrate the trihydrate.

A source of activated alumina is gibbsite which is one form of alumina hydrate derived from bauxite using the Bayer process. However, alpha alumina monohydrate, pseudoboehmite or the alumina trihydrate may be used. Other sources of alumina may also be utilized including clays and aluminum alkoxides. Also, alumina gel may be used as a source of the alumina. The shaped or pre-formed alumina particles are agglomerates having an average pore diameter less than 3.5 nm (35 angstroms). The agglomerates may be formed into spheres, pills, extrudates, flakes, monoliths and the like. Agglomerates formed in this manner generally comprise alumina particles having an average particle diameter of 9,000 to 10,000 nm. The total surface area of a typical alumina particle will be 350 m²/g, while the surface area of the surface only of the alumina particle is 12 m²/g. The adsorbent of the present invention comprises alumina particles having colloidal silica disposed on the surface of the alumina particles without obstructing the remaining surface area within the porous alumina particle. This phenomena was confirmed by scanning electron microscopy and energy dispersive x-ray analysis (SEM-EDS). When the shaped alumina particles which range in size from 1.0 to 3.0 mm are treated with colloidal silica, the silica is disposed in a narrow layer or band concentrated near the surface of the shaped alumina particle. Surprisingly, this narrow band of silica does not interfere with the adsorption properties of the shaped or pre-formed alumina particle, and actually improves the physical properties of the adsorbent including attrition loss and abrasion. The colloidal silica could be applied to the pre-formed alumina particle by spraying, soaking or any other conventional means. It is preferred to apply the colloidal silica layer by soaking the pre-formed alumina particle in a colloidal silica solution.

A colloid is defined as consisting of small particles which are in suspension which fails to settle out and diffracts a beam of light. By the term "colloidal silica" it is meant silica particles ranging in average diameter greater than 4 nm and less than 500 nm. Preferably, the average diameter of the colloidal silica particles ranges from 4 nm to 200 nm, and most preferably the average diameter of the colloidal silica particles ranges from 4 nm to 10 nm. A preferred colloidal silica solution comprises colloidal silica in an aqueous solution. The colloidal silica solution can comprise other ions selected from the group consisting of sodium ions, hydrogen ions, chloride ions, and the like. In the present invention, the colloidal silica does not penetrate the entire particle, but remains within a thin layer near the surface of the pre-formed alumina particle. On the other hand, silicate treating; that is, treating with soluble silica, results in silica dispersed beyond the surface toward the center of the pre-formed alumina particle. Such silicate treated materials do not show the improved physical properties such as attrition loss and abrasion of the adsorbent of the present invention.

One of the problems of coating silica on pre-formed particles of alumina is keeping the coating on the alumina particle. This ability of the coating to remain on the particle is measured by attrition loss and by abrasion loss. Attrition loss is a physical property of the pre-formed alumina particle which is measured by rubbing or grinding the particles together and measuring the loss during the grinding process. Accordingly, a sample of the material is rotated for a set period of time in a cylindrical drum having a single baffle. Any fines produced during the test are determined and considered to be a measure of the propensity of the material to produce fines in the course of transportation, handling and use. Typically, 100g of material are rotated for 1800 revolutions at a rate of 60 revolutions per minute. The colloidal silica coated alumina particles of the present invention surprisingly showed a significant reduction in attrition loss relative to untreated and silicate treated alumina particles. The attrition loss after colloidal silica treatment was less than 0.5 wt-% and more particularly the attrition loss of the colloidal silica treated alumina was less than 0.2 wt-%. This represents a 400% improvement over conventionally silicate treated and untreated alumina.

Abrasion loss is measured by placing a weighted sample of material on a screen and tapping the screen for 30 minutes while catching any dust produced. The amount of dust produced is determined and expressed as a weight percent loss. Abrasion loss determined for the colloidal silica treated alumina particles showed significant improvement over conventional silica treated and untreated aluminas. The abrasion loss for colloidal silica treated alumina particles was less than 0.5 wt-%, and more particularly less than 0.05 wt-%.

### EXAMPLES

The following examples are provided to illustrate the process of the present invention and are not intended to limit the scope of the claims that follow. The examples are based on laboratory data of adsorption characteristics of various desiccants or on process engineering design calculations and adsorption relationships as noted. Some of the examples presented below are experiments done with unactivated, pre-formed alumina particles as described hereinabove. They are formed in a conventional manner by agglomerating flash calcined alumina as described hereinabove.

### EXAMPLE 1: (Spray Treatment)

1000g of unactivated, pre-formed alumina particles of 2.4 to 4 mm in diameter were treated in a 0.3 meter laboratory rotating drum and sprayed by hand with the following solutions. The method used was to spray the pre-formed alumina particles for 3-5 minutes with 70-80 cc of the silica solution followed by 5 minute further rotation. The alumina particles were then tray activated for 1 hour at 400°C in a Grieve oven and analyzed for attrition according to the American Society for Testing and Measurement (ASTM) test designation D 4058-87. Abrasion was also measured to determine the abrasion loss of activated alumina wherein a 165g sample is placed on a 595 micron screen and the screen is tapped for 30 minutes. Abrasion loss is the weight percent of sample lost through the screen.

**TABLE 1**

| Sample | Treatment Solution | Approx. SiO₂ content (VFB*) | Abrasion Loss, SPM 202B, wt-% | Attrition, ASTM D4058-87, wt-% |
|---|---|---|---|---|
| 1-1 | None | 0 | 0.66 | 0.85 |
| 1-2 | Water | 0 | 0.62 | 0.77 |
| 1-3 | Na₂SiO₃ | 2.2 | 1.03 | 0.89 |
| 1-4 | Ludox® Cl | 2.1 | 0.048 | 0.10 |
| 1-5 | Ludox® SM | 1.8 | 0.04 | 0.21 |

| | | | | |
|---|---|---|---|---|
| * volatile free basis | | | | |

Ludox® Cl (DuPont Corp. identified as Ludox® CL) is a colloidal silica coated with alumina and containing chloride as an ion. The Ludox® CL has a total content of SiO₂ and Al₂O₃ of 30 wt-%, and a pH of 4.6. Ludox® SM (DuPont Corp. identified as Ludox® SM-30) is sodium-stabilized 30 wt-% colloidal silica, with a pH of 10.5. The spraying solution for samples (1-4) and (1-5) was prepared by diluting the original Ludox@ reagent with an equal mass of water. A weight of 92.7g of diluted Ludox@ Cl solution was sprayed over 1000g pre-formed alumina particles to make sample (1-4), and 78.6g of diluted Ludox® SM was sprayed over 1000g of pre-formed alumina particles to make sample (1-5).

Sodium metasilicate Na₂SiO₃·5 H₂O is a technical grade reagent available from Alfa Aesar. Forty grams of the granular product was dissolved in 100g water. The pre-formed particles (1000g) were sprayed with 108g of sodium metasilicate solution to make sample (1-3).

The abrasion loss for the water treated control sample (1-2) is practically the same as the untreated particles of sample (1-1). The abrasion loss of the alumina particles treated with both forms of colloidal silica samples (1-4) and (1-5) are improved by more than one order of magnitude, while the abrasion loss with the sodium silicate sample (1-3) actually became worse, indicating that the silicate coating may be contributing to the abrasion loss. The samples treated with colloidal silica were significantly reduced in attrition loss under the ASTM test of 1800 revolutions of the test drum.

In Example 1, the treatment with colloidal silica has apparently produced a narrow layer of silica around the alumina particle that protects the outer surface from loss of material by attrition and abrasion. It is surprising that sodium silicate is distributed more evenly through the alumina core and is ineffective in producing an outer layer with the associated benefits.

### EXAMPLE 2: (Rehydration of silica treated pre-formed particles)

The pre-formed alumina particles treated with solutions in Example 1 were further analyzed by thermal gravimetric analysis (TGA) a few hours after the treatment, stored at room temperature in closed glass vials, and re-analyzed after 11 days. A differential TGA plot of weight loss vs. temperature gives insight into the alumina phases that are present in the sample. Of particular interest is the phase change or "rehydration" of the alumina to aluminum hydroxide [Al(OH)₃]. Aluminum hydroxide gives a water loss at 270°C, whereas alumina does not. Based on the area under the peak of the differential TGA plot at 300°C, rehydration was estimated as follows:

**TABLE 2 Rehydration Effects on Alumina Particles Conversion to Al(OH)₃ with time**

| Sample | Approx. SiO₂ content (VFB*) | Conversion to Al(OH)₃, %, Same day | Conversion to Al(OH)₃, %, After 11 days |
|---|---|---|---|
| 1-2 | 0 | 1.0 | 7.0 |
| 1-3 | 2.2 | 2.0 | 7.5 |
| 1-4 | 2.1 | 3.8 | 3.8 |
| 1-5 | 1.8 | 1.0 | 3.8 |

| | | | |
|---|---|---|---|
| * volatile free basis | | | |

The data show that treatment with colloidal silica in samples (1-4) and (1-5) enhanced the stability of the pre-formed alumina particles and resulted in a significantly reduced tendency for rehydration, relative to the untreated and silicate treated alumina.

### EXAMPLE 3: (Stability towards rehydration of activated alumina particles)

The pre-formed alumina particles produced in Example 1 were activated at 400°C in an oven. Then 70g of activated particles were added to 90g deionized water and stored at room temperature for a prolonged period of time. Small samples were withdrawn and analyzed by TGA to determine the degree of rehydration. The results are shown in Table 3.

**TABLE 3 Rehydration Stability**

| Sample | Rehydration after 24 h | Rehydration after 90 h | Rehydration after 240 h |
|---|---|---|---|
| 1-1 | 5.1 | 9.7 | 15.0 |
| 1-2 | 4.0 | 9.5 | 14.2 |
| 1-3 | 5.5 | 8.5 | 12.0 |
| 1-4 | 3.3 | 7.6 | 12.6 |
| 1-5 | 4.2 | 8.8 | 12.4 |

The data on the activated particles in Table 3 show that all the silica-coating materials, including sodium silicate and both colloidal silicas, reduced the rehydration tendency of alumina. After 240 hours in water, the untreated (1-1) and water-treated (1-2) lost more than 14 wt-% of the alumina to rehydration, but the silica-treated particles lost only 12 wt-%, an improvement of 15% after 240 hours, which is unexpected. The expected result would have been that only the SiO₂-coated portion of the coated pre-formed alumina particle would resist re-hydration. The expected improvement in re-hydration would be just 3.5 wt-% for the 20-micron penetration of SiO₂ into the particle observed in Example 5 below.

### EXAMPLE 4: (BET Surface area)

The pre-formed alumina particles treated in Example 1 and activated at 400°C were tested for BET surface area. The results, given in Table 4, show that the surface area was retained in spite of the silica coating. This shows that the coating did not form an impermeable envelope around the pre-formed alumina particles.

**TABLE 4**

| Sample | Treatment Solution | Approx. SiO₂ content (VFB*) | BET Surface Area, m²/g |
|---|---|---|---|
| 1-2 | Water | 0 | 359 |
| 1-3 | Na₂SiO₃ | 2.2 | (not measured) |
| 1-4 | Ludox® Cl | 2.1 | 356 |
| 1-5 | Ludox® SM | 1.8 | 366 |

| | | | |
|---|---|---|---|
| * volatile free basis | | | |

### EXAMPLE 5: (Location of silica species)

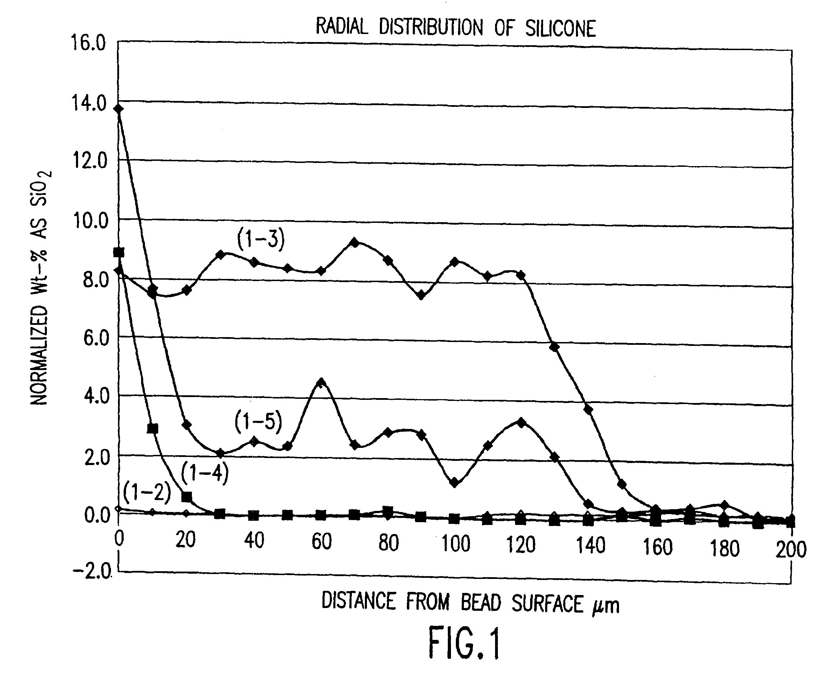

The location of the silicate species in the treated particles of Example 1 was investigated by SEM-EDS scanning electron microscopy and the silica content was determined within a particle by energy dispersive analysis by x-rays. Measurements were made across the interior of the particle to determine the silica distribution of a sectioned particles of 3.5 mm in diameter. The presence of silica as SiO₂ in weight percent was plotted against the distance from the outer surface of the particles in the FIGURE. The nomenclature here is the same as in Example 1. These data show that a colloidal silica layer was formed on the outer surface by the treatment with colloidal silicas. The Ludox® Cl produced a silica layer that penetrated only 20 microns into the particle. The Ludox® SM deposited more SiO₂ on the outside, and its concentration also trailed off at 20 microns, but a small amount penetrated farther into the particle to 140 microns. The sodium silicate was more evenly distributed in the outer 140 microns of the particle.

### EXAMPLE 6: (Soaking vs. spraying colloidal silica)

In another preparation, a sodium stabilized colloidal silica solution (30% silica) (available from Nalco Chemical as Nalco® 1130) was applied to 3.5 to 6.7 mm pre-formed alumina particles by spraying and soaking. The amount of colloidal silica applied is shown in Table 5 below:

**TABLES**

| Sample | Treatment Solution | Treatment Method | Silica Added, wt-% (VFB*) | Abrasion Loss, SPM 202B, wt-% |
|---|---|---|---|---|
| 6-1 | Water | Soak | 0 | 0.35 |
| 6-2 | Nalco® 1130 | Soak | 0.8 | 0.17 |
| 6-3 | Water | Spray | 0 | 1.33 |
| 6-4 | Nalco® 1130 | Spray | 2.2 | 0.15 |

| | | | | |
|---|---|---|---|---|
| * volatile free basis | | | | |

Sample (6-3) was prepared by spraying 900g of pre-formed alumina particles with 78.7g water. Sample (6-4) was prepared by spraying 900g of pre-formed alumina particles with 62.1g diluted Nalco® colloidal silica solution. The diluted colloidal silica solution was prepared by mixing Nalco® 1130 with an equal mass of deionized water. The soaking was done with water (1000g pre-formed alumina particles with 500g water for sample (6-1)) and colloidal silica (800g pre-formed alumina particles with 400g liquid consisting of 50g undiluted Nalco® 1130, 30% colloidal silica solution and 350g water for sample (6-2)). In both cases, the soaking solution just covered the pre-formed alumina particles placed in a beaker. After allowing the pre-formed alumina particles to stand without stirring for 25 minutes, the liquid was decanted. Both the sprayed and soaked pre-formed alumina particles were further de-watered by being spread over a screen tray and immediately activated at 400°C for one hour. The results show that merely soaking in water is effective in reducing abrasion loss, compared to spraying with water. However, spraying or soaking with colloidal silica are significantly more effective in reducing abrasion loss by more than 200% over treatment with water.

### EXAMPLE 7: (Dust Measurement)

Pre-formed alumina particles having an average diameter of between 1.4 mm and 2.8 mm were treated by spraying with water, diluted with 30% colloidal silica, and sodium silicate, and then activated at 400°C. As in Example 6, the diluted colloidal silica solution was prepared by diluting the 30% colloidal silica solution of Example 6 with an equal mass of water. The dust level of the samples was reduced significantly by spraying with colloidal silica compared to spraying with water. Unexpectedly, sodium silicate treatment actually increased the dust level of the particles.

**TABLE 6**

| Sample | Treatment Solution | Treatment Method | Silica Added, wt-% (VFB*) | Relative Dust |
|---|---|---|---|---|
| 7-1 | Water | Spray | 0 | 466 |
| 7-2 | 30% Colloidal Silica | Spray | 1.6 | 80 |
| 7-3 | Na₂SiO₃ | Spray | No data | 753 |

| | | | | |
|---|---|---|---|---|
| * volatile free basis | | | | |

## Claims

1. A method for producing an adsorbent for drying compressed gas comprising:
a) coating a pre-formed alumina particle having a surface area between 100 and 550 m²/g with a coating solution comprising colloidal silica to provide a coated pre-formed particle having a narrow layer of colloidal silica dispersed thereon; and
b) drying and activating the coated pre-formed particle to produce the adsorbent.

2. The method of claim 1 wherein the coating solution also comprises an ion selected from the group consisting of sodium, chloride and hydrogen.

3. A process for the drying of a compressed gas comprising a gas component and water, said process comprising contacting the compressed gas stream with an adsorbent to adsorb at least a portion of the water to produce a dry compressed gas stream, wherein said selective adsorbent comprises a shaped alumina particle having dispersed thereon a colloidal silica layer, the adsorbent being produced according to any of claims 1 or 2.

4. The process of claim 3 wherein the shape of the shaped alumina particle is selected from the group consisting of spherical, an extrudate, a pill, a flake or a monolith.

5. The process of any of claims 3 o 4 further comprising periodically purging the selective adsorbent to desorb the water.

6. The process of any of claims 3 to 5 wherein the contacting of the compressed gas with the adsorbent takes place in a pressure swing adsorption process wherein the adsorbent is depressurized to an effective desorption pressure and purged to desorb the water.

7. A shaped particle having a core consisting of a shaped alumina carrier having a colloidal silica layer dispersed on the shaped alumina carrier wherein the alumina carrier has a surface area between 100 and 550 m²/g, at least 60 percent of the colloidal silica being present in a band extending from the surface towards the center and having a width of less than 50 microns.

8. The shaped particle of claim 7 wherein the band of colloidal silica extending from the surface toward the center comprises a width of less than 20 microns.

9. An air brake dryer assembly having a refiiiabie or replaceable cartridge containing the shaped particle of claim 7 or 8.

## Patentansprüche

1. Verfahren zur Herstellung eines Adsorptionsmittels zum Trocknen von komprimiertem Gas, bei dem man:
a) einen vorgeformten Aluminiumoxidpartikel, der eine Oberfläche zwischen 100 und 550 m²/g aufweist, mit einer Beschichtungslösung beschichtet, die kolloidales Siliziumdioxid enthält, um einen beschichteten vorgeformten Partikel bereitzustellen, der eine dünne Schicht von darauf fein verteiltem kolloidalem Siliziumdioxid aufweist, und
b) den beschichteten vorgeformten Partikel zur Erzeugung des Adsorptionsmittels trocknet und aktiviert.

2. Verfahren nach Anspruch 1, wobei die Beschichtungslösung auch ein Ion enthält, das unter Natrium, Chlorid und Wasserstoff ausgewählt ist.

3. Verfahren zur Trocknung eines komprimierten Gases, das eine Gaskomponente und Wasser umfaßt, wobei das Verfahren umfaßt, daß man den Strom des komprimierten Gases mit einem Adsorptionsmittel in Kontakt bringt, um wenigstens einen Teil des Wassers zu adsorbieren, um einen Strom getrockneten komprimierten Gases zu erzeugen, wobei das ausgewählte Adsorptionsmittel einen geformten Aluminiumoxidpartikel umfaßt, der darauf fein verteilt eine Schicht von kolloidalem Siliziumdioxid aufweist, wobei das Adsorptionsmittel nach einem der Ansprüche 1 oder 2 hergestellt ist.

4. Verfahren nach Anspruch 3, wobei die Form des geformten Aluminiumoxidpartikels unter kugelförmig, einem Extrudat, einer Pille, einer Flocke oder einem Monolithen ausgewählt ist.

5. Verfahren nach einem der Ansprüche 3 oder 4, bei dem man weiterhin das selektive Adsorptionsmittel unter Desorption des Wassers regelmäßig reinigt.

6. Verfahren nach einem der Ansprüche 3 bis 5, bei dem das Inkontaktbringen des komprimierten Gases mit dem Adsorptionsmittel in einem Druckwechseladsorptionsverfahren stattfindet, wobei das Adsorptionsmittel einem auf einen wirksamen Desorptionsdruck herabgesetzten Druck ausgesetzt und gereinigt wird, um das Wasser zu desorbieren.

7. Geformter Partikel, der einen Kern aufweist, der aus einem geformten Aluminiumoxidträger besteht, der eine auf dem geformten Aluminiumoxidträger fein verteilte Schicht von kolloidalem Siliziumdioxid aufweist, wobei der Aluminiumoxidträger eine Oberfläche zwischen 100 und 550 m²/g aufweist, wobei wenigstens 60 % des kolloidalen Siliziumdioxids in einem Bereich vorliegen, der sich von der Oberfläche zum Zentrum erstreckt, und der eine Breite von weniger als 50 Mikrometer aufweist.

8. Geformter Partikel gemäß Anspruch 7, wobei der Bereich des kolloidalen Siliziumdioxids, der sich von der Oberfläche zum Zentrum erstreckt, eine Breite von weniger als 20 Mikrometer umfaßt.

9. Eine Druckluftpumpenanordnung, die eine wiederbefüllbare oder austauschbare Kartusche aufweist, die den geformten Partikel gemäß Anspruch 7 oder 8 enthält.

## Revendications

1. Procédé de production d'un adsorbant destiné au séchage d'un gaz comprimé, comprenant :
a) le revêtement d'une particule d'alumine préalablement formée, ayant une surface spécifique comprise entre 100 et 550 m²/g d'une solution de revêtement contenant de la silice colloïdale destinée à donner une particule revêtue préalablement formée ayant une couche étroite de silice colloïdale dispersée en surface, et
b) le séchage et l'activation de la particule revêtue préalablement formée pour la production de l'adsorbant.

2. Procédé selon la revendication 1, dans lequel la solution de revêtement contient aussi un ion choisi dans le groupe constitué par le sodium, le chlorure et l'hydrogène.

3. Procédé de séchage d'un gaz comprimé contenant un ingrédient gazeux et de l'eau, le procédé comprenant la mise en contact du courant de gaz comprimé avec un adsorbant destiné à adsorber une partie au moins de l'eau pour la production d'un courant de gaz comprimé sec, dans lequel l'adsorbant sélectif contient une particule d'alumine conformée sur laquelle est dispersée une couche de silice colloïdale, l'adsorbant étant produit selon l'une des revendications 1 et 2.

4. Procédé selon la revendication 3, dans lequel la forme de la particule conformée d'alumine est sélectionnée dans le groupe formé par les configurations sphériques, par un extrudat, par une pilule, par une paillette et par un élément monolithique.

5. Procédé selon l'une des revendications 3 et 4, comprenant en outre la purge périodique de l'adsorbant sélectif pour la désorption de l'eau.

6. Procédé selon l'une quelconque des revendications 3 à 5, dans lequel la mise en contact du gaz comprimé avec l'adsorbant est réalisée dans un procédé d'adsorption avec oscillation de pression dans lequel l'adsorbant est soumis à une réduction de pression à une pression efficace pour la désorption et est purgé pour la désorption de l'eau.

7. Particule conformée ayant un noyau constitué d'un support conformé d'alumine ayant une couche de silice colloïdale dispersée sur le support conformé d'alumine, dans laquelle le support d'alumine a une surface spécifique de 100 à 550 m²/g, 60 % au moins de la silice colloïdale étant présente dans une bande s'étendant de la surface vers le centre et ayant une largeur inférieure à 50 µm.

8. Particule conformée selon la revendication 7, dans laquelle la bande de silice colloïdale s'étendant depuis la surface vers le centre a une largeur inférieure à 20 µm.

9. Ensemble de séchage de frein pneumatique ayant une cartouche rechargeable ou remplaçable contenant la particule conformée selon la revendication 7 ou 8.
